# FASCICULE DE BREVET EUROPEEN

(11) **EP 2 856 708 B1**
(45) Date de publication et mention de la délivrance du brevet: **26.04.2017**
(21) Numéro de dépôt: 13730292.3
(22) Date de dépôt: 29.05.2013
(51) Int. Cl.: H04L 12/58

(54) **PROCÉDÉS DE DÉLIVRANCE DE COURRIELS À LA DEMANDE, SERVEURS DE COURRIELS ET PROGRAMMES D'ORDINATEUR METTANT EN OEUVRE DE TELS PROCÉDÉS**
VERFAHREN ZUR LIEFERUNG VON ELEKTRONISCHER POST AUF ANFRAGE, SERVER FÜR ELEKTRONISCHE POST UND COMPUTERPROGRAMME ZUR UMSETZUNG DER BESAGTEN VERFAHREN
METHODS FOR DELIVERING ELECTRONIC MAILS ON REQUEST, ELECTRONIC MAIL SERVERS AND COMPUTER PROGRAMS IMPLEMENTING SAID METHODS

(30) Priorité: 31.05.2012 FR 1255029
(43) Date de publication de la demande: 08.04.2015
(73) Titulaire: Streamwide, 75010 Paris (FR)
(72) Inventeur: THEMEREAU, Vincent, F-33000 Bordeaux (FR)
(74) Mandataire: Cabinet Plasseraud
(86) Numéro de dépôt international: PCT/FR2013/051194
(87) Numéro de publication internationale: WO 2013/178943

(56) Documents cités:
- WO-A1-2005/117372
- US-A1- 2006 218 234
- US-A1- 2011 040 842

## Description

La présente invention est relative aux serveurs de courriels et aux procédés de délivrance de courriels à la demande à des clients distants, par exemple des terminaux mobiles reliés au réseau internet.

Plus particulièrement, l'invention se rapporte à un procédé de délivrance de courriels à la demande d'un serveur de courriels à au moins un client distant via un réseau internet.

Avec le développement et la diversification des terminaux électroniques, un utilisateur peut aujourd'hui être amené à consulter sa boîte de courriels (ou « courriers électroniques ») depuis un ordinateur, un terminal mobile, un téléphone portable, une tablette tactile ou n'importe quel autre dispositif capable de communiquer avec le réseau internet. Ces clients distants possèdent des capacités de calcul, de stockage et d'affichage variées et emploient des protocoles de communication multiples. Ils disposent en outre de connections au réseau internet dont la disponibilité et la bande passante peuvent être réduites ou fluctuantes. La délivrance des courriels à l'utilisateur et leur bonne réception et présentation sur l'unité d'affichage du client distant sont donc fréquemment source d'incertitude.

Le document EP-2-144-409-B1 décrit un exemple de procédé permettant de fournir un message de courrier électronique en plusieurs parties à un terminal mobile pour s'adapter à la faible bande passante et aux capacités de stockages réduites de tels terminaux client.

Les documents US 2006/218234 A1 et US 2011/040842 A1 décrivent des exemples de procédés permettant de fournir un message de courrier électronique sous la forme d'une page internet au format WAP à un terminal distant comme un téléphone portable, pour permettre son affichage à l'aide d'un navigateur internet du terminal distant. De tels procédés ne permettent pas de sauvegarder aisément les messages sur le terminal et impliquent en outre la transmission d'une quantité importante de données, notamment des données permettant la mise en forme de la page WAP pour l'affichage sur le terminal ce qui pose problème lorsque la bande passante disponible est réduite ou fluctuante. Le document WO2005117372 décrit un procédé de transfert de message entre une terminal mobile et un serveur de courriels utilisant une interface du type SOAP vers le mobile et des interfaces POP/IMAP/SMTP vers le serveur. La présente invention vient encore améliorer la situation.

A cet effet, selon l'invention, un procédé du genre en question est caractérisé en ce que ledit serveur de courriels échange des données avec au moins un serveur de stockage via un réseau et en ce qu'il comprend une étape de délivrance comportant les opérations de :
recevoir, du client distant, sur le serveur de courriels, une demande de délivrance d'un courriel identifié par un identifiant de courriel;
obtenir depuis au moins un serveur de stockage des données à encapsuler et des données d'attributs de messages, lesdites données étant associées à l'identifiant de courriel ;
générer le courriel à partir des données à encapsuler et des données d'attributs de messages ; et
transmettre le courriel au client distant.

Grâce à ces dispositions, un courriel est généré dynamiquement et transmis lorsque le client distant en fait la demande. Ce courriel peut ainsi être adapté au terminal client. De plus, les performances du serveur de courriel sont améliorées, entre autre car il n'a pas besoin de stocker les courriels en mémoire.

Dans des modes de réalisation préférés de l'invention, on peut éventuellement avoir recours en outre à l'une et/ou à l'autre des dispositions suivantes :
- l'opération d'obtenir depuis au moins un serveur de stockage des données à encapsuler et des données d'attributs de messages comprend la mise à jour desdites données sur le serveur de stockage ;
- le serveur de courriels récupère depuis un serveur de stockage des informations de caractéristiques techniques associées au client distant ;
- l'opération de générer le courriel est réalisée en fonction des informations de caractéristiques techniques ;
- l'opération d'obtenir depuis au moins un serveur de stockage des données à encapsuler et des données d'attributs de messages est réalisée en fonction des informations de caractéristiques techniques ;
- les données à encapsuler comportent des données choisies dans une liste comprenant un message vocal, un message vocal visuel, une image, une vidéo, un enregistrement sonore, une télécopie, un document numérisé, une notification d'événement ;
- le procédé comprend en outre une étape d'authentification réalisée avant l'étape de délivrance et pendant laquelle le serveur de courriels identifie le client distant et récupère depuis un serveur de stockage les informations de caractéristiques techniques associées au client distant ;
- le serveur de stockage est accessible, par le client distant et via le réseau internet, uniquement par l'intermédiaire du serveur de courriel ;

L'invention a également pour objet un serveur de courriels délivrant des courriels à la demande à au moins un client distant via un réseau internet, le serveur de courriels échangeant des données avec au moins un serveur de stockage via un réseau, le serveur de courriels comprenant :
une unité de réception pour recevoir une demande d'un client distant pour la délivrance d'un courriel identifié par un identifiant de courriel;
une unité de communication pour obtenir depuis au moins un serveur de stockage des données à encapsuler et des données d'attributs de messages, lesdites données étant associées à l'identifiant de courriel ;
une unité de génération pour générer le courriel identifié à partir des données à encapsuler et des données d'attributs de messages ; et
une unité d'émission pour délivrer le courriel identifié au client distant.

L'invention a encore pour objet un produit programme d'ordinateur comprenant des instructions aptes à mettre en oeuvre, lors d'une exécution de ce programme par un processeur d'un serveur de courriels relié à au moins un client distant via un réseau internet et au moins un serveur de stockage via un réseau, les opérations de :
recevoir d'un client distant une demande de délivrance d'un courriel identifié par un identifiant de courriel;
obtenir depuis au moins un serveur de stockage des données à encapsuler et des données d'attributs de messages, lesdites données étant associées à l'identifiant de courriel ;
générer un courriel identifié à partir des données à encapsuler et des données d'attributs de messages ; et
transmettre le courriel identifié au client distant.

De façon générale, certains de ces modes de réalisation présentent un ou plusieurs des avantages suivants. Il est possible grâce à ce procédé de transmettre au client des données variées sous forme de courriel, par exemple des messages vocaux ou visuels, des télécopies, des notifications d'événements comme des appels manqués. Ces données peuvent être enregistrées sur le serveur de stockage dans un format différent du format de courriel ce qui évite de devoir adapter le serveur de stockage à l'utilisation. Ces données peuvent être converties lors de la génération du courriel en un format adapté au client distant.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est un schéma synoptique illustrant un système de délivrance de courriel à la demande pouvant employer un procédé de délivrance de courriel à la demande selon l'invention ;
- les figures 2a et 2b sont des schémas synoptiques illustrant un mode de réalisation d'un procédé de délivrance de courriel à la demande selon l'invention en détaillant les échanges entre un client distant et un serveur de courriel;
- la figure 3 est un schéma synoptique illustrant un mode de réalisation d'un procédé de délivrance de courriel à la demande selon l'invention en détaillant les échanges entre un serveur de courriel et un serveur de stockage;
- la figure 4 est un organigramme illustrant un mode de réalisation d'un procédé de délivrance de courriel à la demande selon l'invention ;

Sur les différentes figures, les mêmes références désignent des éléments identiques ou similaires.

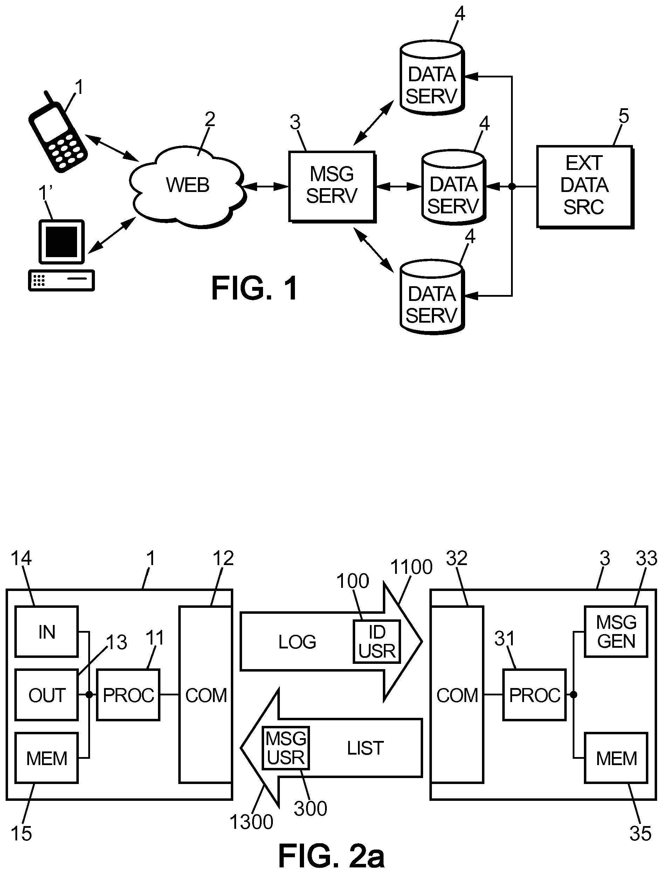

En se référant tout d'abord à la **figure 1**, un système de délivrance de courriel à la demande peut comprendre un ou plusieurs clients distants 1, 1' reliés via un réseau internet 2 à un serveur de courriels 3, lui-même relié à au moins un serveur de stockage 4.

On utilisera indifféremment dans la suite de la description les termes « courriel », « message », « courrier électronique », « message électronique » ainsi que les termes dérivés de ces derniers.

A titre purement illustratif, deux clients distants 1 et 1' sont représentés sur la figure 1, mais n'importe quel nombre de clients distants peut être employé. Les clients distants peuvent être de types différents. À titre d'exemple, un premier client distant 1 illustré sur la figure 1 comporte un terminal mobile de type « smartphone », téléphone intelligent ou ordiphone, tandis qu'un deuxième client distant l'illustré sur la figure 1 peut comprendre un ordinateur de bureau.

Le ou les clients distants 1 sont connectés au serveur de courriel 3 via le réseau internet 2 et peuvent échanger des informations en utilisant des protocoles de communication sur le réseau internet connus comme TCP/IP acronymes anglo-saxon respectifs de « Transmission Control Protocol » et « Internet Protocole ».

Les clients distants 1 peuvent être connectés au réseau internet 2, directement ou par l'intermédiaire d'un routeur ou d'un pare-feu, par exemple dans le cas où ledit client distant 1 est constitué par un ordinateur de bureau.

Alternativement, les clients distants peuvent accéder au réseau internet 2 par l'intermédiaire d'un réseau étendu sans fil ou WWAN acronyme anglo-saxon de « Wireless Wide Area Network », également connu sous le nom de réseau cellulaire mobile ou réseau mobile terrestre, ou par l'intermédiaire d'un réseau local sans fil ou WLAN acronyme anglo-saxon de « Wireless Local Area Network ».

Ce réseau sans fil peut par exemple comprendre une pluralité d'antennes-relais de téléphonie mobile également appelées station de base et permettant chacune de communiquer avec les terminaux mobiles ou clients distants présents sur une zone géographique délimitée. Les antennes relais peuvent être reliées, par l'intermédiaire d'équipements de routage, à une passerelle d'interconnexion permettant l'échange de données avec le réseau internet. Le réseau formé par ces équipements peut être de l'un des types suivants : Mobitex Radio Network, DataTAC, GSM (« Global System for Mobile Communication »), GPRS (« General Packet Radio System », TDMA (« Time Division Multiple Access »), CDMA (« Code Division Multiple Access »), CDPD (« Cellular Digital Packet Data »), iDEN (« integrated Digital Enhanced Network »), EvDO (« Evolution-Data Optimized ») CDMA2000, EDGE (« Enhanced Data rates for GSM Evolution »), UMTS (« Universal Mobile Telecommunication Systems »), HSPDA (« High-Speed Downlink Packet Access »), WiMax (« Worldwide Interoperability for Microwave Access ») ou d'un autre type.

En variante, le client distant 1 peut comprendre un ordinateur de bureau, un ordinateur portable, une tablette tactile ou n'importe quel autre dispositif électronique dépourvu de possibilité de connexion audit réseau sans fil. Le client distant 1 peut alors être relié au réseau sans fil par l'intermédiaire d'un dispositif de connexion externe, par exemple relié au client distant 1 par l'intermédiaire de l'une ou d'une combinaison d'une connexion Ethernet, d'une interface USB acronyme anglo-saxon de « Universal Serial Bus », d'une interface FireWire (également connu sous le nom d'interface IEEE 1394), ou d'une autre interface d'échange de données en série, via les ports respectifs ou des interfaces du client distant.

Le réseau internet 2 peut comprendre un réseau privé local, un réseau métropolitain ou MAN, acronyme anglo-saxon de « Metropolitan Area Network », un réseau étendu ou WAN, acronyme anglo-saxon de « Wide Area Network », Internet ou des combinaisons de ceux-ci, combinaisons qui peuvent par exemple comprendre des réseaux privés virtuels.

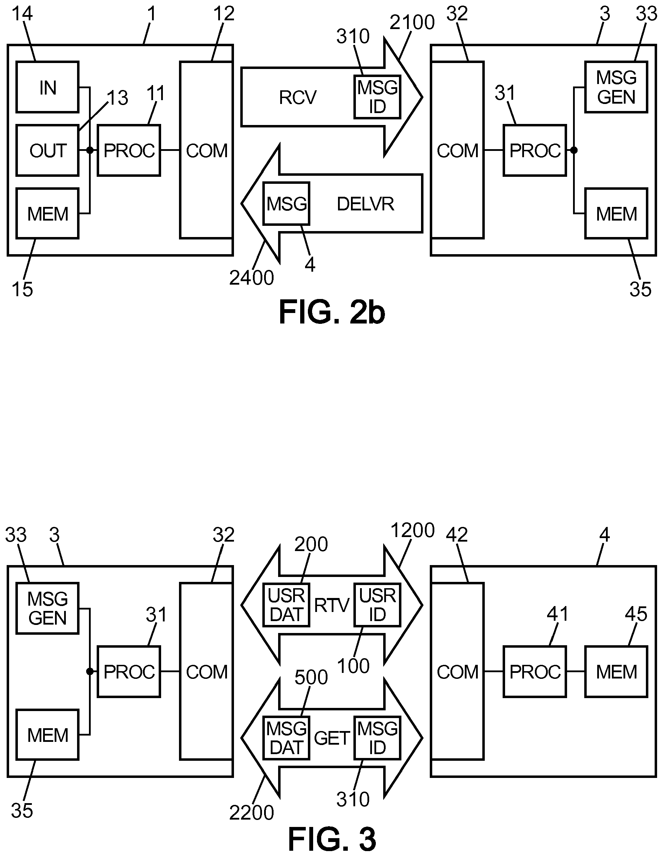

En se référant à présent également aux **figures 2a** **et** **2b**, un client distant 1 peut comprendre un processeur 11 qui commande le fonctionnement d'ensemble du client distant 1.

Le processeur 11 peut être constitué en pratique d'un ou plusieurs microprocesseurs programmés.

Le processeur 11 peut interagir avec un module de communication 12 effectuant les opérations de communication.

Le processeur 11 peut également interagir avec des modules périphériques supplémentaires qui peuvent comprendre, de façon non limitative et optionnelle, des périphériques de sortie 13, des périphériques d'entrée 14 et un module de stockage 15. Les modules périphériques supplémentaires ne sont pas limités à la liste précédente.

Les périphériques de sortie 13 peuvent comporter un module d'affichage, par exemple, un affichage à cristaux liquides (LCD) ou un moniteur, par exemple un écran cathodique ou numérique.

Ils peuvent également comprendre un module de sortie audio, par exemple un haut-parleur ou un casque audio.

Les périphériques d'entrée 14 peuvent comprendre, par exemple, un clavier, une souris, un appareil de navigation comme une ou plusieurs molettes de défilement cliquable, une boule de commande, un pavé tactile, un écran tactile, un microphone audio ou tout autre dispositif permettant à un utilisateur d'envoyer des commandes ou des informations au client distant.

Le clavier peut être un clavier alphanumérique complet, ou peut être un clavier alphanumérique réduit ou simplifiée tel par exemple qu'un clavier de téléphone.

Dans certains modes de réalisation, un périphérique d'entrée 14 et un module d'affichage 13 peuvent être implémentés en utilisant un écran tactile comportant un dispositif d'affichage dont la surface d'entrée est sensible au toucher.

Le module de stockage 15 du client distant 1 peut comprendre, par exemple, une ou plusieurs mémoires à accès direct (RAM), mémoire morte (ROM), un disque dur (HDD), ou n'importe quel autre support de stockage de données numérique.

Le module de stockage 15 peut être utilisé pour stocker des données locales sur le client distant 1 tels que des courriels ou des pièces jointes de courriels.

Dans certains modes de réalisation, le module de stockage 15 est constitué par une mémoire de stockage ayant un emplacement de mémoire réservée pour le stockage des courriels ou des pièces attachées de courriels.

A titre d'illustration, le module de stockage 15 est représenté comme un bloc unique sur la figure 2a mais il sera apprécié que le module de stockage 15 peut comporter une pluralité de supports de mémoire comprenant des supports de mémoire parmi les supports détaillés ci-avant, par exemple ROM, RAM et un disque dur.

Le module de stockage 15 du client distant 1 peut également stocker d'autres données, par exemple des données de services comprenant les informations requises par le client distant 1 pour établir et contrôler la communication avec le réseau internet 2 et le serveur de courriels 3, par exemple, des données de services réseau.

Le module de stockage 15 du client distant 1 peut également stocker des données utilisateur d'applications logicielles tels que des courriels, un carnet d'adresses et d'informations de contact, un agenda, des documents texte, des fichiers image, son ou vidéo, ou toute autre information de l'utilisateur usuellement mémorisée dans le client distant 1.

Les données stockées dans le module de stockage 15 du client distant 1 peuvent être organisées, au moins en partie, en un certain nombre de bases de données contenant par exemple chacune des données du même type de données ou des données associées à une même application logicielle du client distant 1.

Le processeur 11 exécute usuellement des instructions d'un programme également appelé logiciel et enregistré dans le module de stockage 15 et peut par exemple exécuter des modules logiciels stockés dans le module de stockage 15.

Ces modules logiciels peuvent comprendre un programme central ou système d'exploitation et des applications logicielles. Les modules logiciels ou des parties de ceux-ci appelé processus peuvent être temporairement chargé dans une mémoire volatile, par exemple une mémoire à accès direct (RAM) du module de stockage 15.

La mémoire à accès direct est également utilisée pour stocker des données variables d'exécution ou d'autres types de données ou d'information utilisées temporairement au cours de l'exécution d'une application ou d'un module logiciel.

Les applications logicielles peuvent comprendre une variété d'applications dont par exemple, une application de messagerie électronique, une application de messagerie vocale, une application de communication de téléphonie, une application de cartographie, une application d'agenda, une application de carnet d'adresse et une application de lecteur multimédia.

On remarquera que le client distant 1 peut comprendre des modules supplémentaires qui ne sont pas représentés sur la figure 2a mais sont bien connus de l'homme de l'art, par exemple, une alimentation qui peut comprendre une interface avec un réseau électrique urbain ou une ou plusieurs batteries rechargeables.

L'alimentation fournit usuellement de l'énergie électrique à au moins une partie des circuits électriques du client distant 1.

En se référant en particulier aux **figures 2a**, **2b et 3**, un serveur de courriels 3 va maintenant être décrit plus en détail.

Le serveur de courriels 3 peut être mis en oeuvre en employant n'importe quel ordinateur ou serveur connu et peut, par exemple, être réalisé en utilisant un ou plusieurs ordinateurs et/ou serveurs exécutant une ou plusieurs applications logicielles réalisant les fonctions décrites ci-après.

Le serveur de courriels 3 est configuré pour mettre en oeuvre un certain nombre de modules comprenant, de façon non-limitative et optionnelle, un module de contrôle 31, des modules de communication 32, un module de génération de courriel 33 et des modules de stockage 34.

Dans un mode de réalisation, le serveur de courriels 3 peut par exemple comporter un ou plusieurs microprocesseurs qui exécutent des instructions d'un ou plusieurs programmes également appelés applications logicielles de façon à mettre en oeuvre lesdits modules.

Lesdits programmes ou applications logicielles peuvent par exemple être stockés dans une mémoire persistante ou morte du serveur de courriels 3.

Le module de contrôle 31 peut contrôler l'exécution des composants et des modules du serveur de courriels 3, les démarrer, les arrêter et les redémarrer si besoin.

Les modules de communication 32 se connectent avec les clients distants 1 et les serveurs de stockage 4.

Les modules de communications 32 peuvent être adaptés pour communiquer avec les clients distants 1 et les serveurs de stockage 4 via un réseau privé local, un réseau métropolitain (MAN), un réseau étendu (WAN), Internet ou via des combinaisons de ceux-ci, combinaisons qui peuvent par exemple comprendre des réseaux privés virtuels.

Le module de contrôle 31, les modules de communication 32, le module de génération de courriel 33 et les modules de stockage 34 peuvent par exemple chacun être mis en oeuvre grâce à des applications logicielles autonomes, ou bien combinés dans une ou plusieurs applications logicielles, ou comme des processus d'une autre application logicielle.

Dans certains modes de réalisation, les fonctions exercées par chacun des modules identifiés ci-dessus peuvent être réalisées dans une pluralité de modules indépendants plutôt que dans un module unique et intégré, et un ou plusieurs de ces modules peuvent être mis en oeuvre en tant que parties d'autres applications logicielles.

Un client distant 1 peut par exemple contrôler sa boîte de courrier électronique et échanger des courriels avec le serveur de courriel 3 au moyen d'un protocole de consultation, de récupération et/ou d'envoi de courriers électroniques tel que le protocole IMAP, acronyme anglo-saxon de « Internet message access protocol » ou un protocole dérivé.

En variante, le protocole POP, acronyme anglo-saxon de « Post Office Protocol » peut être employé.

En se référant à présent en particulier à la **figure 3**, un serveur de stockage 4 va maintenant être décrit plus en détail.

De façon similaire au serveur de courriels 3, Le serveur de stockage 4 peut être mis en oeuvre en employant n'importe quel ordinateur ou serveur connu et peut, par exemple, être réalisé en utilisant un ou plusieurs ordinateurs et/ou serveurs et exécutant une ou plusieurs applications logicielles réalisant les fonctions décrites ci-après.

Le serveur de stockage 4 est configuré pour mettre en oeuvre un certain nombre de modules comprenant, de façon non-limitative et optionnelle, un module de contrôle 41, des modules de communication 42 et des modules de stockage 45.

Dans un mode de réalisation, le serveur de stockage 4 peut par exemple comporter un ou plusieurs microprocesseurs qui exécutent des instructions d'un ou plusieurs programmes également appelés applications logicielles de façon à mettre en oeuvre lesdits modules.

Lesdits programmes ou applications logicielles peuvent par exemple être stockés dans une mémoire persistante ou morte du serveur stockage 4.

Le module de contrôle 41 peut contrôler l'exécution des composants et les modules du serveur de stockage 4, les démarrer, les arrêter et les redémarrer si besoin.

Les modules de communication 42 peuvent se connecter et échanger des données avec le serveur de courriel 3 et des sources de données externes 5, par exemple via un réseau étendu sans fil (WWAN) également connu sous le nom de réseau cellulaire mobile ou réseau mobile terrestre, un réseau local sans fil (WLAN), un réseau privé local, un réseau métropolitain (MAN), un réseau étendu (WAN), Internet ou des combinaisons de ceux-ci, combinaisons qui peuvent en outre comprendre des réseaux privés virtuels.

Les sources de données externes 5 peuvent comprendre une variété de terminaux sources de types différents selon les données stockées dans le serveur de stockage 4.

À titre purement illustratif, un serveur de stockage 4 d'un système de messagerie vocale, adapté pour stocker des messages vocaux, peut avoir comme sources de données externes 5, des téléphones se connectant audit serveur de stockage via un réseau téléphonique.

Le serveur de courriel 3 se connecte aux modules de communication 42 d'un serveur de stockage 4 à l'aide d'un service web, par exemple en employant un protocole parmi OSA, SOAP, REST, XML-RPC ou une combinaison de ces protocoles.

Tout protocole d'échange de données adapté peut être employé pour la communication entre le serveur de courriel 3 et les serveurs de stockage 4.

Le module de contrôle 41, les modules de communication 42 et les modules de stockage 45 peuvent par exemple chacun être mis en oeuvre grâce à des applications logicielles autonomes, ou bien combinés dans une ou plusieurs applications logicielles, ou comme des processus d'une autre application logicielle.

Dans certains modes de réalisation, les fonctions exercées par chacun des modules identifiés ci-dessus peuvent être réalisées dans une pluralité de modules indépendants plutôt que dans un module unique et intégré, et un ou plusieurs de ces modules peuvent être mis en oeuvre en tant que parties d'autres applications logicielles.

De façon avantageuse, le ou les serveurs de stockage 4 peuvent être accessibles par le client distant 1 via le réseau internet 2 uniquement par l'intermédiaire du serveur de courriel 3.

Ainsi un utilisateur d'un client distant 1 ne peut pas accéder directement aux serveurs de stockage 4 via le réseau internet 2.

De cette façon, les serveurs de stockage 4 peuvent être protégés des risques d'intrusion.

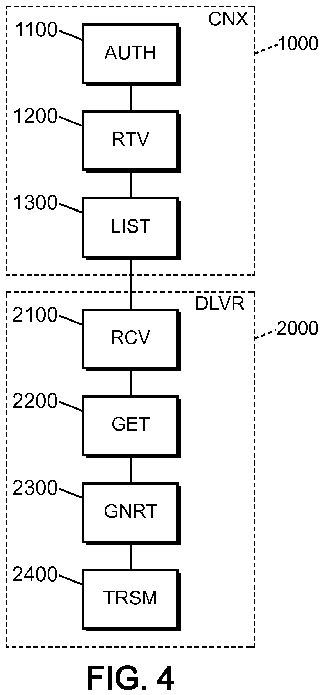

En se référant à présent également à la **figure 4**, un procédé de délivrance de courriels à la demande va maintenant être décrit plus en détail.

Ce procédé comporte une étape de délivrance 2000 pouvant être précédée d'une étape de connexion 1000.

En se référant en particulier aux figures 2a et 4, l'étape de connexion 1000 peut comporter une première opération d'authentification 1100 au cours de laquelle le client distant 1 s'identifie auprès du serveur de courriels 3.

L'opération d'authentification 1100 peut par exemple comprendre la transmission au serveur de courriel 3 d'identifiants utilisateur 100 pouvant comporter par exemple un nom d'utilisateur 110 ainsi qu'un mot de passe 120.

Dans certains modes de réalisation, par exemple lorsque le réseau 2 est un réseau non sécurisé comme Internet, les identifiants utilisateur 100 peuvent avantageusement être communiqués sous forme cryptée.

Les communications peuvent être sécurisées par l'utilisation d'un protocole de transfert sécurisé, par exemple le protocole Transport Layer Security (TLS).

Le client distant 1 peut alors requérir, préalablement à l'envoi des identifiants utilisateur 100, l'ouverture d'une session sécurisée, par exemple une session TLS.

Les communications peuvent alors être cryptées en utilisant une clé de chiffrement symétrique, par exemple en au moyen d'algorithmes de type AES, acronyme anglo-saxon de « Advanced Encryption Standard » ou de type Triple DES, pour « Triple Data Encryption Standard ».

Des clés de chiffrement privées peuvent être générées dans un environnement protégé et utilisées pour le chiffrement et le déchiffrement des données.

Dans un mode de réalisation d'un procédé selon l'invention comportant une telle session sécurisée TLS, le client distant 1 peut, avant de requérir l'ouverture d'une session TLS, demander au serveur de courriel 3 de lister ses capacités, afin de vérifier que le serveur de courriel 3 à la capacité de communiquer par session sécurisée TLS.

L'opération d'authentification 1100 peut être mise-en-oeuvre en employant un protocole de consultation, de récupération et/ou d'envoi de courriers électroniques tel que le protocole IMAP, acronyme anglo-saxon de « Internet message access protocol » ou le protocole POP, acronyme anglo-saxon de « Post Office Protocol ».

Une fois que le serveur de courriel 3 a obtenu les identifiants utilisateur 100, il peut les comparer avec des identifiants utilisateur de référence 130 stockés en mémoire. Les identifiants de référence 130 peuvent également être stockés sur un serveur distant, par exemple un serveur de stockage 4.

Si les identifiants utilisateur 100 sont identiques aux identifiants de référence 130, le client distant 1 peut être identifié.

Au cours d'une deuxième opération 1200, le serveur de courriel 3 peut obtenir des informations de caractéristiques techniques 200 depuis un serveur de stockage 4. Ces informations de caractéristiques techniques 200 sont avantageusement associées aux identifiants utilisateur 100 du client distant 1, par exemple au moyen d'une base de données 299 d'un serveur de stockage 4.

Les informations de caractéristiques techniques 200 peuvent par exemple comprendre des informations de matériel 210 relatives au matériel électronique constituant le client distant 1 et des informations logiciel 220 relatives aux applications logicielles installés sur ledit client distant 1 et/ou au système d'exploitation dudit client distant 1.

Elles peuvent également comporter des informations d'utilisateur 230, relatives à l'utilisateur du client distant 1, par exemple la langue dans laquelle le message celui souhaite lire les messages.

Elles peuvent enfin comporter des informations paramétrées par l'utilisateur du client distant 240 et indiquant par exemple la façon dont ce dernier souhaite accéder aux courriels par l'intermédiaire du client distant 1, par exemple avec ou sans l'affichage des images.

Au cours d'une troisième opération 1300 optionnelle, le client distant 1 peut obtenir une liste de messages 300 contenus dans la boîte de courrier électronique ou dans un répertoire de sa boîte de courrier électronique, par exemple le répertoire correspondant à la boîte de réception.

Le client distant 1 peut envoyer au serveur de courriel 3 une requête, par exemple pour obtenir une liste de message, selon un protocole de consultation, de récupération et/ou d'envoi de courriers électroniques tel que le protocole IMAP, acronyme anglo-saxon de « Internet message access protocol » ou le protocole POP, acronyme anglo-saxon de « Post Office Protocol ».

Cette liste de messages 300 peut contenir un ou plusieurs identifiants de courriels 310 associés chacun à un courriel 400 de la boîte de courrier électronique.

Le serveur de courriel 3 peut utiliser les informations de caractéristiques techniques 200 lors de la génération de la liste de messages 300.

A titre d'illustration, le serveur de courriels 3 peut alors sélectionner uniquement les messages susceptibles d'être lus par le client distant 1 pour les inclure dans la liste de messages 300.

Suite à l'étape de connexion 1000, l'étape de délivrance 2000 consiste, de façon générale et sans être limitatif, pour le serveur de courriel 3 à délivrer à un client distant 1 un courriel 400 demandé par ce dernier. Cette étape peut également comprendre d'autres opérations et va maintenant être détaillée plus avant.

L'étape de délivrance 2000 comporte une première opération de réception 2100, sur le serveur de courriel 3, d'un identifiant de courriel 310 émis par un client distant 1.

Cet identifiant de courriel 310 peut par exemple comporter un ensemble de caractères alphanumériques ou un code identifiant le courriel 400 demandé par le client distant 1 au moment de l'opération de réception 2100.

Cet identifiant de courriel 310 peut être modifié dans le temps par le serveur de courriel 3, par exemple lorsque le courriel 400 est déplacé d'un répertoire à un autre de la boîte de courrier électronique, mais identifie le courriel 400 demandé par le client distant 1 au moment de l'opération de réception 2100.

Puis, au cours d'une opération d'obtention 2200, le serveur de courriel 3 récupère des données de génération de courriel 500 depuis un ou plusieurs serveurs de stockage 4.

Les données de génération de courriel 500 peuvent avantageusement être associées à l'identifiant de courriel 310, par exemple au moyen d'une base de données 599 du serveur de stockage 4.

Les données de génération de courriel 500 peuvent également être associées à l'identifiant de client distant 310, par exemple au moyen d'une base de données 598 d'un serveur de stockage 4.

Les données de génération de courriel 500 peuvent comporter des données à encapsuler 510, par exemple un message vocal ou visuel, une image ou une vidéo, un enregistrement sonore, une télécopie ou un document numérisé, une notification d'évènement, par exemple une notification d'un appel manqué, et/ou toute autre données destinées à être encapsulées dans le courriel 400 ou liées au courriel 400, par exemple sous la forme d'une pièce jointe 410 au moyen du protocole d'échange MIME, acronyme anglo-saxon de « Multipurpose Internet Mail Extensions » ou du protocole S/MIME pour « Secure / Multipurpose Internet Mail Extensions ».

Les données de génération de courriel 500 peuvent également comporter des attributs de message 520 définissant des paramètres de génération du courriel 400.

Les attributs de message 520 peuvent définir la langue dans laquelle le message doit être généré, des paramètres liés à l'objet du message, au corps du message, à l'émetteur du message.

Les attributs de message 520 peuvent définir des paramètres de génération des entêtes, également appelées « headers », du courriel 420.

L'opération d'obtention 2200 peut également comporter la mise à jour sur le serveur de stockage des données de génération de courriel 500.

Cette mise-à-jour peut consister à mettre à jour le statut des données de génération de courriel 500, par exemple dans une base de données, à déplacer les données de génération de courriel 500 dans un autre répertoire d'un module de stockage 45 du serveur de stockage 4 ou à modifier les données de génération de courriel 500 sur le serveur de stockage 4.

À titre purement illustratif, dans un mode de réalisation où le serveur de stockage 4 fait partie d'un système de messagerie vocale et est adapté pour stocker des messages vocaux, les données de génération de courriel 500 peuvent comprendre des messages vocaux et la mise-à-jour desdites données de génération de courriel 500 peut comporter l'archivage desdits messages vocaux.

Une troisième opération de génération 2300 peut ensuite comporter la génération par le serveur de courriel 3 du courriel 400 associé à l'identifiant de courriel 310.

L'opération de génération 2300 est avantageusement réalisée en fonction des informations de caractéristiques techniques 200 et/ou des données de génération de courriel 500.

L'opération de génération 2300 comporte la génération des entêtes 420 du courriel 400, par exemple les entêtes spécifiant l'objet, le destinataire, l'émetteur, la date, l'adresse de réponse, un identifiant secondaire du message, la priorité du courriel, des variables ou des identifiants de versions MIME ou HTTP, le type de contenu, un identifiant de contenu, le type d'encodage, des variables ou des identifiants de version d'application logicielles et/ou tout autre champ de courriel utile.

L'opération de génération 2300 peut également comprendre la génération du corps 430 du courriel 400.

La génération du corps 430 du courriel peut comprendre la génération d'un texte de message, d'images, de vidéo, d'animations et/ou de sons à inclure dans le corps du courriel 430.

Le corps 430 du courriel peut par exemple être généré dans une langue spécifiée par les informations de caractéristiques techniques 200 et/ou les attributs de message 520.

À titre d'illustration non-limitative, les informations logicielles 220, relatives aux applications logicielles installées sur ledit client distant 1, peuvent indiquer que le client distant 1 dispose d'une application logicielle spécifique pour la lecture des messages comportant une pièce jointe munie d'un message vocale.

Le courriel 400 pourra alors être généré de façon à répondre aux spécifications de cette application logicielle, par exemple au moyen d'entêtes 420 ou d'un corps de message 430 adaptés.

Dans un autre mode de réalisation et toujours à titre d'illustration non-limitative, les informations de caractéristiques techniques 200 peuvent indiquer que le client distant 1 accède aux messages au moyen d'un client de messagerie connu comme par exemple Lotus Notes d'IBM, Mail d'Apple, Microsoft Outlook ou Mozilla Thunderbird.

Le courriel 400 pourra alors être généré de façon à être lisible et compréhensible par un utilisateur humain, par exemple au moyen d'entêtes 420 et/ou d'un corps de message 430 adaptés.

L'opération de génération 2300 peut en outre comprendre la génération ou l'adaptation d'une ou de plusieurs pièces jointes 410 au message.

Pour fournir à nouveau un exemple à titre d'illustration non-limitative permettant de mieux comprendre les avantages de l'invention, les informations de caractéristiques techniques 200 peuvent indiquer un ou plusieurs formats de pièce jointe 410 que le client distant 1 est capable de présenter à l'utilisateur, par exemple dans le cas d'un message vocal, un ou plusieurs formats de données audio que le client distant 1 est capable de diffuser par périphérique sortie 13 tel qu'un haut-parleur.

L'opération de génération 2300 peut alors comprendre l'adaptation par transcodage de données à encapsuler 510 de façon à générer une pièce jointe 410 dans un format lisible par le client distant 1.

Enfin, l'opération de génération 2300 peut comporter la concaténation des entêtes 420, corps de message 430 et pièces jointes 410 générées afin de former le courriel 400.

Suite à l'opération de génération 2300, une opération de transmission 2400 comporte la transmission du courriel 400 généré depuis le serveur de courriel 3 jusqu'au client distant 1.

Cette transmission peut se faire via le réseau internet 2 et par exemple selon un protocole de consultation, de récupération et/ou d'envoi de courriers électroniques tel que le protocole IMAP, acronyme anglo-saxon de « Internet message access protocol » ou le protocole POP, acronyme anglo-saxon de « Post Office Protocol ».

De façon générale, les communications entre le client distant 1 et le serveur de courriels 3 peuvent être réalisées selon un protocole de consultation, de récupération et/ou d'envoi de courriers électroniques tel que le protocole IMAP, acronyme anglo-saxon de « Internet message access protocol » ou le protocole POP, acronyme anglo-saxon de « Post Office Protocol ».

Les modes de réalisation de l'invention présentés ci-dessus sont décrits uniquement à titre d'exemples.

L'homme de l'art peut y effectuer des modifications et des combinaisons de modes particuliers de réalisation sans quitter le champ d'application de la présente invention.

En particulier, les caractéristiques d'un ou de plusieurs des modes de réalisation décrits ci-dessus peuvent être choisis et combinés pour créer des variantes de réalisation comprenant des sous-ensembles de caractéristiques qui ne sont pas explicitement décrits ci-dessus.

En outre, les caractéristiques d'un ou de plusieurs des modes de réalisation décrits ci-dessus peuvent être sélectionnées et combinées pour créer des variantes de réalisation comprenant des combinaisons de caractéristiques qui sont pas explicitement décrites ci-dessus.

L'homme de l'art, après examen de l'invention dans son ensemble, verrait à l'évidence les caractéristiques adaptées à de telles combinaisons et sous-combinaisons.

L'objet de l'invention doit également être entendu comme couvrant tous les changements appropriés en matière de technologie, en particulier les évolutions des protocoles informatiques mentionnés ci-avant.

## Revendications

1. Procédé de délivrance de courriels à la demande d'un serveur de courriels à au moins un client distant via un réseau internet, le procédé étant **caractérisé en ce que** ledit serveur de courriels échange des données avec au moins un serveur de stockage via un réseau et **en ce qu'** il comprend une étape de délivrance comportant les opérations de :
recevoir, du client distant et au moyen d'un protocole de consultation, de récupération et/ou d'envoi de courriers électroniques tel que le protocole IMAP ou le protocole POP, sur le serveur de courriels, une demande de délivrance d'un courriel identifié par un identifiant de courriel;
obtenir depuis au moins un serveur de stockage des données à encapsuler et des données d'attributs de messages, lesdites données étant associées à l'identifiant de courriel ;
générer le courriel à partir des données à encapsuler et des données d'attributs de messages ; et
transmettre le courriel au client distant au moyen d'un protocole de consultation, de récupération et/ou d'envoi de courriers électroniques tel que le protocole IMAP ou le protocole POP.

2. Procédé de délivrance de courriels à la demande selon la revendication 1, **caractérisé en ce que** l'opération d'obtenir depuis au moins un serveur de stockage des données à encapsuler et des données d'attributs de messages comprend la mise à jour desdites données sur le serveur de stockage.

3. Procédé de délivrance de courriels à la demande, selon l'une quelconque des revendications 1 à 2, **caractérisé en ce que** le serveur de courriels récupère depuis un serveur de stockage des informations de caractéristiques techniques associées au client distant.

4. Procédé de délivrance de courriels à la demande selon la revendication 3, **caractérisé en ce que** l'opération de générer le courriel est réalisée en fonction des informations de caractéristiques techniques.

5. Procédé de délivrance de courriels à la demande selon l'une quelconque des revendications 3 à 4, **caractérisé en ce que** l'opération d'obtenir depuis au moins un serveur de stockage des données à encapsuler et des données d'attributs de messages est réalisée en fonction des informations de caractéristiques techniques.

6. Procédé de délivrance de courriels à la demande selon l'une quelconque des revendications 1 à 5, **caractérisé en ce que** les données à encapsuler comportent des données choisies dans une liste comprenant un message vocal, un message vocal visuel, une image, une vidéo, un enregistrement sonore, une télécopie, un document numérisé, une notification d'évènement.

7. Procédé de délivrance de courriels à la demande selon l'une quelconque des revendications 1 à 6, **caractérisé en ce qu'**il comprend en outre une étape d'authentification réalisée avant l'étape de délivrance et pendant laquelle le serveur de courriels identifie le client distant et récupère depuis un serveur de stockage les informations de caractéristiques techniques associées au client distant.

8. Procédé de délivrance de courriels à la demande selon l'une quelconque des revendications 1 à 7, **caractérisé en ce que** le serveur de stockage est accessible, par le client distant et via le réseau internet, uniquement par l'intermédiaire du serveur de courriel.

9. Serveur de courriels délivrant des courriels à la demande à au moins un client distant via un réseau internet, le serveur de courriels échangeant des données avec au moins un serveur de stockage via un réseau, le serveur de courriels comprenant :
une unité de réception pour recevoir, au moyen d'un protocole de consultation, de récupération et/ou d'envoi de courriers électroniques tel que le protocole IMAP ou le protocole POP, une demande d'un client distant pour la délivrance d'un courriel identifié par un identifiant de courriel;
une unité de communication pour obtenir depuis au moins un serveur de stockage des données à encapsuler et des données d'attributs de messages, lesdites données étant associées à l'identifiant de courriel ;
une unité de génération pour générer le courriel identifié à partir des données à encapsuler et des données d'attributs de messages ; et
une unité d'émission pour délivrer, au moyen d'un protocole de consultation, de récupération et/ou d'envoi de courriers électroniques tel que le protocole IMAP ou le protocole POP, le courriel identifié au client distant.

10. Produit programme d'ordinateur comprenant des instructions aptes à mettre en oeuvre, lors d'une exécution de ce programme par un processeur d'un serveur de courriels relié à au moins un client distant via un réseau internet et au moins un serveur de stockage via un réseau, les opérations de :
recevoir d'un client distant, au moyen d'un protocole de consultation, de récupération et/ou d'envoi de courriers électroniques tel que le protocole IMAP ou le protocole POP, une demande de délivrance d'un courriel identifié par un identifiant de courriel;
obtenir depuis au moins un serveur de stockage des données à encapsuler et des données d'attributs de messages, lesdites données étant associées à l'identifiant de courriel ;
générer un courriel identifié à partir des données à encapsuler et des données d'attributs de messages ; et
transmettre, au moyen d'un protocole de consultation, de récupération et/ou d'envoi de courriers électroniques tel que le protocole IMAP ou le protocole POP, le courriel identifié au client distant.

## Patentansprüche

1. Verfahren zur Bereitstellung von E-Mails auf Anforderung von einem E-Mail-Server über ein Internet-Netz an zumindest einen entfernten Client, wobei das Verfahren **dadurch gekennzeichnet ist, dass** der E-Mail-Server über ein Netz Daten mit zumindest einem Speicherserver austauscht und dass es einen Bereitstellungsschritt umfasst, der die Vorgänge beinhaltet:
vom entfernten Client mittels eines Protokolls zum Ansehen, Abruf und/oder Versand elektronischer Mitteilungen, wie beispielsweise des IMAP-Protokolls oder des POP-Protokolls, eine Anforderung zur Bereitstellung einer durch eine E-Mail-Kennung identifizierten E-Mail auf dem E-Mail-Server zu empfangen;
zu verkapselnde Daten und Nachrichtenattributdaten von zumindest einem Speicherserver zu gewinnen, wobei die Daten mit der E-Mail-Kennung verknüpft sind;
anhand der zu verkapselnden Daten und der Nachrichtenattributdaten die E-Mail zu erzeugen und
mittels eines Protokolls zum Ansehen, Abruf und/oder Versand elektronischer Nachrichten, wie beispielsweise des IMAP-Protokolls oder des POP-Protokolls, die E-Mail an den entfernten Client zu übertragen.

2. Verfahren zur Bereitstellung von E-Mails auf Anforderung nach Anspruch 1, **dadurch gekennzeichnet, dass** der Vorgang des Gewinnens der zu verkapselnden Daten und der Nachrichtenattributdaten von zumindest einem Speicherserver die Aktualisierung der Daten auf dem Speicherserver umfasst.

3. Verfahren zur Bereitstellung von E-Mails auf Anforderung nach einem der Ansprüche 1 bis 2, **dadurch gekennzeichnet, dass** der E-Mail-Server von einem Speicherserver Informationen über mit dem entfernten Client verknüpfte technische Merkmale abruft.

4. Verfahren zur Bereitstellung von E-Mails auf Anforderung nach Anspruch 3, **dadurch gekennzeichnet, dass** der Vorgang des Erzeugens der E-Mail in Abhängigkeit von den Informationen über technische Merkmale erfolgt.

5. Verfahren zur Bereitstellung von E-Mails auf Anforderung nach einem der Ansprüche 3 bis 4, **dadurch gekennzeichnet, dass** der Vorgang des Gewinnens der zu verkapselnden Daten und der Nachrichtenattributdaten von zumindest einem Speicherserver in Abhängigkeit von den Informationen über technische Merkmale erfolgt.

6. Verfahren zur Bereitstellung von E-Mails auf Anforderung nach einem der Ansprüche 1 bis 5, **dadurch gekennzeichnet, dass** die zu verkapselnden Daten aus einer Liste, die eine Sprachnachricht, eine Sprach-Bild-Nachricht, ein Bild, ein Video, eine Tonaufzeichnung, ein Fax, ein digitalisiertes Dokument, eine Ereignisbenachrichtigung umfasst, ausgewählte Daten beinhalten.

7. Verfahren zur Bereitstellung von E-Mails auf Anforderung nach einem der Ansprüche 1 bis 6, **dadurch gekennzeichnet, dass** es ferner einen Authentifizierungsschritt umfasst, der vor dem Bereitstellungsschritt ausgeführt wird und währenddessen der E-Mail-Server den entfernten Client identifiziert und von einem Speicherserver die mit dem entfernten Client verknüpften Informationen über technische Merkmale abruft.

8. Verfahren zur Bereitstellung von E-Mails auf Anforderung nach einem der Ansprüche 1 bis 7, **dadurch gekennzeichnet, dass** der Speicherserver vom entfernten Client und über das Internet-Netz ausschließlich über den E-Mail-Server erreicht werden kann.

9. E-Mail-Server, der E-Mails auf Anforderung über ein Internet-Netz an zumindest einen entfernten Client bereitstellt, wobei der E-Mail-Server über ein Netz Daten mit zumindest einem Speicherserver austauscht, wobei der E-Mail-Server Folgendes umfasst:
eine Empfangseinheit, um mittels eines Protokolls zum Ansehen, Abruf und/oder Versand elektronischer Nachrichten, wie beispielsweise des IMAP-Protokolls oder des POP-Protokolls, eine Anforderung von einem entfernten Client zur Bereitstellung einer durch eine E-Mail-Kennung identifizierten E-Mail zu empfangen;
eine Kommunikationseinheit, um zu verkapselnde Daten und Nachrichtenattributdaten von zumindest einem Speicherserver zu gewinnen, wobei die Daten mit der E-Mail-Kennung verknüpft sind;
eine Erzeugungseinheit, um anhand der zu verkapselnden Daten und der Nachrichtenattributdaten die identifizierte E-Mail zu erzeugen; und
eine Sendeeinheit, um mittels eines Protokolls zum Ansehen, Abruf und/oder Versand elektronischer Nachrichten, wie beispielsweise des IMAP-Protokolls oder des POP-Protokolls, dem entfernten Client die identifizierte E-Mail bereitzustellen.

10. Computerprogrammprodukt, umfassend Anweisungen, die dazu ausgelegt sind, bei einer Ausführung dieses Programms durch einen Prozessor eines E-Mail-Servers, der über ein Internet-Netz mit zumindest einem entfernten Client und über ein Netz mit zumindest einem Speicherserver verbunden ist, die Vorgänge zu realisieren:
von einem entfernten Client mittels eines Protokolls zum Ansehen, Abruf und/oder Versand elektronischer Nachrichten, wie beispielsweise des IMAP-Protokolls oder des POP-Protokolls, eine Anforderung zur Bereitstellung einer durch eine E-Mail-Kennung identifizierten E-Mail zu empfangen;
zu verkapselnde Daten und Nachrichtenattributdaten von zumindest einem Speicherserver zu gewinnen, wobei die Daten mit der E-Mail-Kennung verknüpft sind;
anhand der zu verkapselnden Daten und der Nachrichtenattributdaten eine identifizierte E-Mail zu erzeugen und
mittels eines Protokolls zum Ansehen, Abruf und/oder Versand elektronischer Nachrichten, wie beispielsweise des IMAP-Protokolls oder des POP-Protokolls, die identifizierte E-Mail an den entfernten Client zu übertragen.

## Claims

1. Method for delivering electronic mails on request from an electronic mail server to at least one remote client via an internet network, the method being **characterized in that** said electronic mail server exchanges data with at least one storage server via a network, and **in that** it comprises a delivery step including the operations of:
receiving on the electronic mail server, from the remote client, a request for delivery of an electronic mail identified by an electronic mail identifier;
obtaining, from at least one storage server, data to be encapsulated and message attribute data, said data being associated with the electronic mail identifier;
generating the electronic mail from the data to be encapsulated and the message attribute data; and
transmitting the electronic mail to the remote client.

2. Method for delivering electronic mails on request according to claim 1, wherein the operation of obtaining data to be encapsulated and message attribute data from at least one storage server comprises updating said data on the storage server.

3. Method for delivering electronic mails on request according to any one of claims 1 to 2, wherein the electronic mail server retrieves, from a storage server, technical specifications information associated with the remote client.

4. Method for delivering electronic mails on request according to claim 3, wherein the operation of generating the electronic mail is performed based on the technical specifications information.

5. Method for delivering electronic mails on request according to any one of claims 3 to 4, wherein the operation of obtaining data to be encapsulated and message attribute data from at least one storage server is performed based on the technical specifications information.

6. Method for delivering electronic mails on request according to any one of claims 1 to 5, wherein the data to be encapsulated contain data selected from a list comprising: a voicemail message, a visual voicemail message, an image, a video, a sound recording, a fax, a scanned document, an event notification.

7. Method for delivering electronic mails on request according to any one of claims 1 to 6, wherein it further comprises an authentication step performed before the delivery step and during which the electronic mail server identifies the remote client and retrieves from a storage server the technical specifications information associated with the remote client.

8. Method for delivering electronic mails on request according to any one of claims 1 to 7, wherein the storage server is accessible, by the remote client and via the internet network, solely through the electronic mail server.

9. Electronic mail server delivering electronic mails on request to at least one remote client via an internet network, the electronic mail server exchanging data with at least one storage server via a network, the electronic mail server comprising:
a receiving unit for receiving a request from a remote client to deliver an electronic mail identified by an electronic mail identifier;
a communication unit for obtaining data to be encapsulated and message attribute data from at least one storage server, said data being associated with the electronic mail identifier;
a generation unit for generating the identified electronic mail from the data to be encapsulated and message attribute data; and
a transmitting unit for delivering the identified electronic mail to the remote client.

10. Computer program product comprising instructions suitable for implementing, when this program is executed by a processor of an electronic mail server connected to at least one remote client via an internet network and to at least one storage server via a network, the operations of:
receiving from a remote client a request to deliver an electronic mail identified by an electronic mail identifier;
obtaining, from at least one storage server, data to be encapsulated and message attribute data, said data being associated with the electronic mail identifier;
generating an identified electronic mail on the basis of the data to be encapsulated and the message attribute data; and
sending the identified electronic mail to the remote client.
